# EUROPEAN PATENT APPLICATION

(11) **EP 4 574 421 A1**
(43) Date of publication of application: **25.06.2025**
(21) Application number: 23872413.2
(22) Date of filing: 27.09.2023
(51) Int. Cl.: B32B 15/08, C23C 28/00

(54) **PRECOATED STEEL SHEET**

(30) Priority: 27.09.2022 JP 2022154113
(71) Applicant: NIPPON STEEL CORPORATION, Chiyoda-ku Tokyo 100-8071 (JP)
(72) Inventor: FUJII, Takashi, Tokyo 100-8071 (JP); KAWAMURA, Yasuaki, Tokyo 100-8071 (JP); HIRAI, Akiko, Tokyo 100-8071 (JP); TOSHIN, Kunihiko, Tokyo 100-8071 (JP); FUJITA, Kohei, Tokyo 100-8071 (JP); KUROKAWA, Fumiya, Tokyo 100-8071 (JP); NAKAGAWA, Jun, Tokyo 100-8071 (JP)
(74) Representative: Vossius & Partner Patentanwälte Rechtsanwälte mbB
(86) International application number: PCT/JP2023/035134
(87) International publication number: WO 2024/071191

(57) **Abstract**

To achieve more excellent scratch resistance and paint film adhesion even when the film thickness of a paint film is thick. The pre-coated steel sheet according to the present invention includes: a Zn-containing plating layer; a chemical treatment coating layer containing at least zirconium; and a coating layer, in which the coating layer contains at least a binder resin and resin particles, an average thickness of the coating layer is 3 µm or more and 10 µm or less, an intensity of zirconium at the interface of the coating layer on the Zn-containing plating layer side, which is calculated based on a depth profile of the distribution of zirconium of the coating layer by glow discharge optical emission spectrometry, is equal to or more than 1.05 times and equal to or less than 3.00 times an average intensity of zirconium in a range of 1 µm or more and 2 µm or less from the surface of the coating layer, and when a cross section of the coating layer cut in the thickness direction is observed, within a region having a length of 60 µm in a direction orthogonal to the thickness direction, an average area ratio of the resin particles in the region is 5% or more and 30% or less.

## Description

### [Technical Field]

The present invention relates to a pre-coated steel sheet.

### [Background Art]

Organic resin-coated plated steel sheets (also called pre-coated steel sheets), each made by coating a surface layer of a zinc-based plated steel sheet with an organic resin coating film, have come to be used for home appliances, building materials, automobiles, and other applications, in place of conventional post-painted products that were painted after forming. This pre-coated steel sheet is made by coating a rust-proofed steel sheet or plated steel sheet with a colored organic coating, and has properties of having workability and good corrosion resistance while having beauty. After being pressed, this organic resin-coated plated steel sheet is often used as a material for home appliances, building materials, automobiles, and so on, without being further painted. For this reason, such an organic resin-coated plated steel sheet needs to have excellent scratch resistance so as not to lose its beauty during working. Therefore, various techniques have been proposed in order to improve the various properties of the pre-coated steel sheet, such as scratch resistance.

For example, Patent Document 1 listed below has disclosed a pre-coated metal sheet for electronic and electric devices that is excellent not only in scratch resistance but also in corrosion resistance and electrical conductivity. Such a pre-coated metal sheet is a metal sheet having a predetermined surface roughness, on the surface of which a chemical coating is provided, and then on one side thereof, a resin coating having a film thickness of 0.4 to 2.0 µm and containing urethane beads or fluororesin beads having an average particle diameter of 1 to 10 µm is provided, and on the other side thereof, a resin coating having a film thickness of 0.2 to 2.0 µm and containing urethane beads or fluororesin beads having an average particle diameter of 0.1 to 6.0 µm is provided.

### [Prior Art Document]

### [Patent Document]

Patent Document 1: Japanese Laid-open Patent Publication No. 2010-5545

### [Disclosure of the Invention]

### [Problems to Be Solved by the Invention]

Here, various types of pre-coated metal sheets, including such a pre-coated metal sheet as disclosed in Patent Document 1 described above, are generally manufactured by providing a desired paint film on a metal sheet serving as a base material (for example, steel sheets including various types of plated steel sheets, aluminum sheets, aluminum alloy sheets, and so on) using a continuous painting line. The metal sheet with a desired paint film provided thereon is wound into a coil shape at the end of the continuous painting line, and then the metal sheet is transported to a customer in a coil state.

At this time, as disclosed in Patent Document 1 described above, the film thickness of the paint film formed is often relatively thin, which is about 2 µm at most, and thus the color tone of the metal sheet being a base material (for example, the color tone of the plated steel sheet used as the base material) is often seen through the film. Thus, when providing the pre-coated metal sheet to a customer, the color tone design that also takes into account the color tone of the base material that can be seen through the film is sometimes performed.

On the other hand, from the viewpoint of stability of the color tone of the pre-coated metal sheet to be provided, a situation where the color tone of the metal sheet being a base material is not seen through the film is sometimes preferable. It is presumed that in order to prevent the color tone of the metal sheet being a base material from being seen through the film, the film thickness of the paint film provided on the base material should be increased. However, when the film thickness of the paint film is increased, there is a high possibility that the scratch resistance and the paint film adhesion as the pre-coated metal sheet will decrease.

Thus, the present invention has been made in consideration of the above-described problems, and an object thereof is to provide a pre-coated steel sheet capable of achieving more excellent scratch resistance and paint film adhesion even when the film thickness of a paint film is thick.

### [Means for Solving the Problems]

As a result of extensive research conducted by the present inventors in order to solve the above-described problems, they came up with an idea that, when a zinc (Zn)-plated steel sheet is used as a base material, the distribution state of bonding components at the interface between a Zn-containing plating layer and a paint film is made appropriate to improve the paint film adhesion and that the paint film is made to have scratch resistance by containing resin particles in the paint film. As a result of further research based on such an idea, the present inventors have come up with the present invention as described below.

The gist of the present invention completed based on such an idea is as follows.
(1) A pre-coated steel sheet, includes: a Zn-containing plating layer located on a surface of a base material steel sheet; a chemical treatment coating layer located on the Zn-containing plating layer and containing at least zirconium; and a coating layer located on the chemical treatment coating layer, in which the coating layer contains at least a binder resin and resin particles, an average thickness of the coating layer is 3 µm or more and 10 µm or less, an intensity of zirconium at the interface of the coating layer on the Zn-containing plating layer side, which is calculated based on a depth profile of the distribution of zirconium of the coating layer by glow discharge optical emission spectrometry, is equal to or more than 1.05 times and equal to or less than 3.00 times an average intensity of zirconium in a range of 1 µm or more and 2 µm or less from the surface of the coating layer toward a thickness direction of the coating layer, which is calculated based on the depth profile, and when a cross section of the coating layer cut in the thickness direction is observed, within a region having a length of 60 µm in a direction orthogonal to the thickness direction, an average area ratio of the resin particles in the region is 5% or more and 30% or less.
(2) The pre-coated steel sheet according to (1), in which the coating layer further contains at least one of a crosslinking agent and a color pigment.
(3) The pre-coated steel sheet according to (2), in which the crosslinking agent is at least one of a melamine resin and an isocyanate resin.
(4) The pre-coated steel sheet according to (1) or (2), in which the resin particles are made of the same type of resin as the binder resin.
(5) The pre-coated steel sheet according to (1) or (2), in which an average particle diameter of the resin particles is within a range of 1.5 to 15.0 µm.
(6) The pre-coated steel sheet according to (1) or (2), in which an average particle diameter of the resin particles is within a range of 3.0 to 10.0 µm, the content of the resin particles in the coating layer is 5 to 15 mass% relative to the total content of the binder resin and the resin particles, and an average thickness of the coating layer is within a range of 4 to 8 µm.
(7) The pre-coated steel sheet according to (1) or (2), in which the resin particles are acrylic resin particles.

### [Effect of the Invention]

As explained above, according to the present invention, it is possible to achieve more excellent scratch resistance and paint film adhesion even when the film thickness of a paint film is thick.

### [Brief Description of the Drawings]

[FIG. 1A] FIG. 1A is an explanatory view schematically illustrating a structure of a pre-coated steel sheet according to an embodiment of the present invention.
[FIG. 1B] FIG. 1B is an explanatory view schematically illustrating the structure of the pre-coated steel sheet according to the same embodiment.
[FIG. 2] FIG. 2 is an explanatory view for explaining a coating layer of the pre-coated steel sheet according to the same embodiment.
[FIG. 3] FIG. 3 is an explanatory view for explaining the coating layer of the pre-coated steel sheet according to the same embodiment.

### [Embodiments for Carrying out the Invention]

Hereinafter, a preferred embodiment according to the present invention will be explained referring to the attached drawings. Incidentally, in this description and the drawings, the same reference numerals and symbols are given to components having substantially the same functional configurations to omit duplicated explanation.

### (Regarding a pre-coated steel sheet)

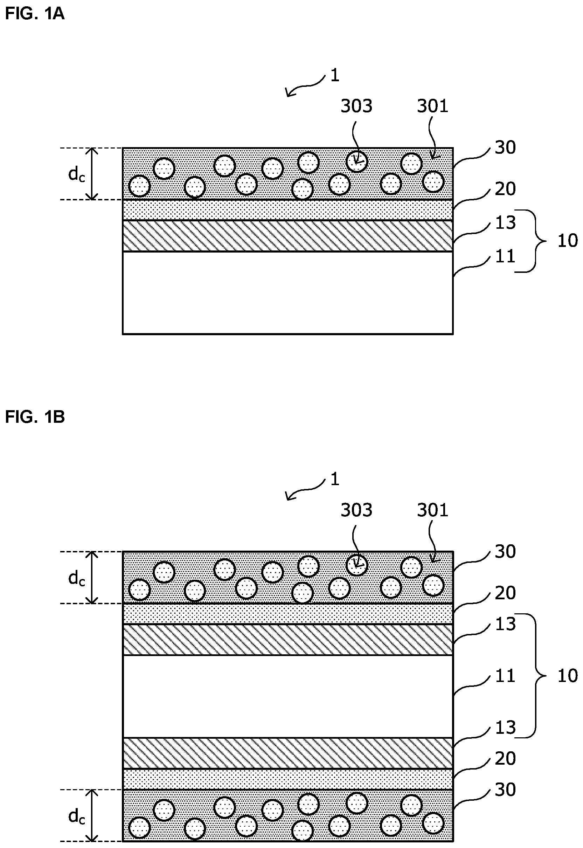

There is explained a pre-coated steel sheet according to the embodiment of the present invention in detail below with reference to FIG. 1A and FIG. 1B. FIG. 1A and FIG. 1B are explanatory views schematically illustrating a structure of the pre-coated steel sheet according to this embodiment.

### <Regarding the overall configuration of the pre-coated steel sheet>

As schematically illustrated in FIG. 1A, a pre-coated steel sheet 1 according to this embodiment includes a zinc-based plated steel sheet 10 serving as a base material, a chemical treatment coating layer 20 located on one surface of the zinc-based plated steel sheet 10, and a coating layer 30 located on the chemical treatment coating layer 20.

Further, as illustrated in FIG. 1A, the zinc-based plated steel sheet 10 being the base material includes a base material steel sheet 11 and a Zn-containing plating layer 13 provided on the surface of the base material steel sheet 11.

Incidentally, such chemical treatment coating layer 20 and coating layer 30 may be provided on both surfaces of the zinc-based plated steel sheet 10 as schematically illustrated in FIG. 1B.

### <Regarding the zinc-based plated steel sheet 10>

As described above, the zinc-based plated steel sheet 10, which is the base material of the pre-coated steel sheet 1 according to this embodiment, includes the base material steel sheet 11 and the Zn-containing plating layer 13.

### <<Base material steel sheet 11>>

Here, as the base material steel sheet 11, it is possible to use various steel sheets such as, for example, Al-killed steel, ultralow carbon steel containing Ti, Nb, and so on, and high-strength steel in which ultralow carbon steel further contains strengthening elements such as P, Si, and Mn.

Further, the thickness of the base material steel sheet 11 only needs to be set appropriately according to the mechanical strength or the like required for the pre-coated steel sheet 1, and can be set to, for example, about 0.2 mm to 10.0 mm.

### <<Zn-containing plating layer 13>>

On the surface of such a base material steel sheet 11 as above, the Zn-containing plating layer 13 is located. Such a Zn-containing plating layer 13 is composed of various zinc-based platings. Examples of such zinc-based plating include hot-dip galvanizing, electrogalvanizing, zinc-nickel alloy plating, alloying hot-dip galvanizing, aluminum-zinc alloy plating, zinc-aluminum-magnesium alloy plating, zinc-vanadium composite plating, zinc-zirconium composite plating, and so on.

Among such zinc-based platings, it is preferable to use the zinc-aluminum-magnesium alloy plating as the Zn-containing plating layer 13 in particular, and it is more preferable to use zinc-aluminum-magnesium-silicon alloy plating, which contains Al: 4 to 22 mass%, Mg: 1 to 10 mass%, Si: 0.0001 to 2.0000 mass%, and the balance of Zn and impurities.

### [Al: 4 to 22 mass%]

The content of Al is set to 4 mass% or more, thereby making it possible to further improve the corrosion resistance of the steel sheet. The content of Al is more preferably 5 mass% or more. On the other hand, the content of Al is set to 22 mass% or less, thereby making it possible to further improve the corrosion resistance of the steel sheet while inhibiting saturation of such a corrosion resistance improving effect as above. The content of Al is more preferably 16 mass% or less.

### [Mg: 1 to 10 mass%]

The content of Mg is set to 1 mass% or more, thereby making it possible to further improve the corrosion resistance of the steel sheet. The content of Mg is more preferably 2 mass% or more. On the other hand, in a plating bath used for forming the plating layer, the concentration of Mg is adjusted to the concentration such that the content of Mg in the Zn-containing plating layer 13 after manufacture is 10 mass% or less, thereby making it possible to stabilize the generation of dross in the plating bath and stably manufacture a plated steel sheet. In the plating bath used for forming the Zn-containing plating layer 13, it is more preferable to adjust the concentration of Mg to the concentration such that the content of Mg in the Zn-containing plating layer 13 after manufacture is 5 mass% or less.

### [Si: 0.0001 to 2.0000 mass%]

The content of Si is set to 0.0001 mass% or more, thereby making it possible to further improve the adhesion of the Zn-containing plating layer 13 (more specifically, the adhesion between the base material steel sheet 11 and the Zn-containing plating layer 13). On the other hand, the content of Si is set to 2.0000 mass% or less, thereby making it possible to further improve the adhesion of the Zn-containing plating layer 13 while inhibiting saturation of the adhesion improving effect of the Zn-containing plating layer 13. The content of Si is more preferably 1.6000 mass% or less.

Further, the Zn-containing plating layer 13 according to this embodiment may contain 1 mass% or less of elements such as Fe, Sb, and Pb either alone or in combination, in place of part of Zn of the balance.

As the zinc-based plated steel sheet 10 with the Zn-containing plating layer 13 having such chemical components as above provided thereon, for example, there can be cited a hot-dip zinc-aluminum-magnesium-silicon alloy-plated steel sheet (for example, "SUPERDYMA (registered trademark)" manufactured by NIPPON STEEL CORPORATION), or the like, such as a plated steel sheet including a Zn-11%Al-3%Mg-0.2%Si alloy plating layer.

Such a Zn-containing plating layer 13 as explained above can be manufactured as follows, for example. First, the surface of the prepared base material steel sheet 11 is subjected to pretreatment such as cleaning and degreasing as necessary. Then, the base material steel sheet 11 that has been subjected to the pretreatment as necessary is immersed in a hot-dip plating bath having desired chemical components, and is pulled out of such a plating bath. In such a plating operation, the plating may be performed by either a continuous plating method of coils or a plating method of a single cut sheet.

The temperature of the hot-dip plating bath varies depending on the composition, but preferably falls within a range of 400 to 500°C, for example.

Further, the plating coating weight of such a Zn-containing plating layer 13 as above can be controlled by adjusting the speed of pulling out the steel sheet, the flow rate and flow velocity of a wiping gas sprayed from a wiping nozzle provided above the plating bath, or the like. The plating coating weight is preferably 30 g/m² or more in total on both surfaces of the steel sheet (namely, 15 g/m² or more per side). The coating weight is set to 30 g/m² or more, thereby making it possible to reliably ensure the corrosion resistance of the zinc-based plated steel sheet 10. The plating coating weight is more preferably 40 g/m² or more in total on both surfaces of the steel sheet. On the other hand, the plating coating weight is preferably 600 g/m² or less in total on both surfaces of the steel sheet (namely, 300 g/m² or less per side). The coating weight is set to 600 g/m² or less, thereby making it possible to achieve a further improvement in the corrosion resistance while ensuring surface smoothness of the Zn-containing plating layer 13. The plating coating weight is more preferably 550 g/m² or less in total on both surfaces of the steel sheet.

After the coating weight of the hot-dip plating is adjusted, the steel sheet is cooled. At this time, there is no need to limit the cooling conditions in particular.

The zinc-based plated steel sheet 10 according to this embodiment has been explained above.

### <Regarding the chemical treatment coating layer 20>

The chemical treatment coating layer 20 according to this embodiment is a coating layer that is located between the zinc-based plated steel sheet 10 and the coating layer 30, and is a layer formed by what is called a chemical treatment.

The chemical treatment coating layer 20 according to this embodiment contains at least a zirconium compound, and may further contain, for example, one or more selected from the group consisting of a resin, a silane coupling agent, silica, phosphoric acid and its salts, fluoride, a vanadium compound, and tannin or tannic acid as necessary. That is, the chemical treatment coating layer 20 according to this embodiment can be said to be a coating layer that contains at least zirconium. These substances are contained, and thereby the film formability after application of a chemical treatment solution, the barrier property (denseness) of the coating against corrosive factors such as moisture and corrosive ions, the film adhesion to the plated surface, and so on further improve, which contributes to the improvement in the corrosion resistance of the coating.

In particular, when the chemical treatment coating layer 20 contains the zirconium compound (and further contains the silane coupling agent more preferably), a crosslinked structure is formed within the chemical treatment coating layer 20 to also strengthen the bond with the plated surface, thus making it possible to further improve the adhesion or barrier property of the coating.

Further, when the chemical treatment coating layer 20 further contains one or more of silica, phosphoric acid and its salts, fluoride, and a vanadium compound, these substances function as an inhibitor, and a precipitate coating or a passive coating is formed on the plating or steel surface, thereby making it possible to further improve the corrosion resistance.

The components that can be contained in such a chemical treatment coating layer 20 as above each will be explained in detail below with reference to examples.

### [Zirconium compound]

Examples of the zirconium compound include zirconium normal propylate, zirconium normal butyrate, zirconium tetraacetylacetonate, zirconium monoacetylacetonate, zirconium bisacetylacetonate, zirconium monoethylacetoacetate, zirconium acetylacetonate bisethylacetoacetate, zirconium acetate, zirconium monostearate, zirconium carbonate, zirconium ammonium carbonate, potassium zirconium carbonate, sodium zirconium carbonate, and so on. The added amount of the zirconium compound in the chemical treatment agent for forming the chemical treatment coating layer 20 can be set to 2 to 80 g/L, for example. When the added amount of the zirconium compound is less than 2 g/L, the adhesion to the plated surface may be insufficient, leading to a decrease in the forming adhesion of the coating. Further, when the added amount of the zirconium compound exceeds 80 g/L, the cohesive force of the chemical treatment coating layer 20 may be insufficient, leading to a decrease in the forming adhesion of the coating. Such zirconium compounds may be used alone or in combination of two or more.

### [Resin]

The resin is not particularly limited, and for example, well-known organic resins such as a polyester resin, a polyurethane resin, an epoxy resin, a phenol resin, an acrylic resin, and a polyolefin resin can be used. To further improve the adhesion to the plated steel sheet for pre-coated steel sheets, it is preferable to use at least one of resins having forced sites or polar functional groups in a molecular chain (such as a polyester resin, a urethane resin, an epoxy resin, and an acrylic resin). The resins may be used alone or in combination of two or more.

The content of the resin in the chemical treatment coating layer 20 is preferably 0 mass% or more and more preferably 1 mass% or more relative to the coating solid content, for example. Further, the content of the resin in the chemical treatment coating layer 20 is preferably 85 mass% or less, more preferably 60 mass% or less, and further preferably 40 mass% or less relative to the coating solid content, for example. When the content of the resin exceeds 85%, the proportion of the other coating components decreases, resulting in that the performance required as the coating other than corrosion resistance may decrease.

### [Silane coupling agent]

Examples of the silane coupling agent include γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropylmethyldimethoxysilane, γ-methacryloxypropyltrimethoxysilane, γ-methacryloxypropylmethyldimethoxysilane, γ-methacryloxypropyltriethoxysilane, γ-methacryloxypropylmethyldiethoxysilane, N-β-(N-vinylbenzylaminoethyl)-γ-aminopropyltrimethoxysilane, N-β-(N-vinylbenzylaminoethyl)-γ-aminopropylmethyldimethoxysilane, N-β-(N-vinylbenzylaminoethyl)-γ-aminopropyltriethoxysilane, N-β-(N-vinylbenzylaminoethyl)-γ-aminopropylmethyldiethoxysilane, γ-glycidoxypropyltrimethoxysilane, γ-glycidoxypropylmethyldimethoxysilane, γ-glycidoxypropyltriethoxysilane, γ-glycidoxypropylmethyldiethoxysilane, γ-mercaptopropyltrimethoxysilane, γ-mercaptopropylmethyldimethoxysilane, γ-mercaptopropyltriethoxysilane, γ-mercaptopropylmethyldiethoxysilane, methyltrimethoxysilane, dimethyldimethoxysilane, methyltriethoxysilane, dimethyldiethoxysilane, vinyltriacetoxysilane, γ-chloropropyltrimethoxysilane, γ-chloropropylmethyldimethoxysilane, γ-chloropropyltriethoxysilane, γ-chloropropylmethyldiethoxysilane, hexamethyldisilazane, γ-anilinopropyltrimethoxysilane, γ-anilinopropylmethyldimethoxysilane, γ-anilinopropyltriethoxysilane, γ-anilinopropylmethyldiethoxysilane, vinyltrimethoxysilane, vinylmethyldimethoxysilane, vinyltriethoxysilane, vinylmethyldiethoxysilane, octadecyldimethyl[3-(trimethoxysilyl)propyl]ammonium chloride, octadecyldimethyl[3-(methyldimethoxysilyl)propyl]ammonium chloride, octadecyldimethyl[3-(triethoxysilyl)propyl]ammonium chloride, octadecyldimethyl[3-(methyldiethoxysilyl)propyl]ammonium chloride, γ-chloropropylmethyldimethoxysilane, γ-mercaptopropylmethyldimethoxysilane, methyltrichlorosilane, dimethyldichlorosilane, trimethylchlorosilane, and so on. The added amount of the silane coupling agent in the chemical treatment agent for forming the chemical treatment coating layer 20 can be set to 2 to 80 g/L, for example.

When the added amount of the silane coupling agent is less than 2 g/L, the adhesion to the plated surface may be insufficient, leading to a decrease in the forming adhesion of the paint film. Further, when the added amount of the silane coupling agent exceeds 80 g/L, the cohesive force of the chemical treatment coating layer 20 may be insufficient, leading to a decrease in the forming adhesion of the coating. The silane coupling agents as described as an example above may be used alone or in combination of two or more.

### [Silica]

As the silica, there can be used, for example, commercially available silica gels such as "SNOWTEX N," "SNOWTEX C," "SNOWTEX UP," and "SNOWTEX PS" manufactured by Nissan Chemical Corporation, and "ADELITE AT-20Q" manufactured by ADEKA CORPORATION, or powdered silica such as AEROSIL #300 manufactured by NIPPON AEROSIL CO., LTD., or ones equivalent to these pieces of commercially available silica. The silica can be appropriately selected according to the required performance of the pre-coated plated steel sheet. The added amount of the silica in the chemical treatment agent for forming the chemical treatment coating layer 20 is preferably set to, for example, 1 to 40 g/L. When the added amount of the silica is less than 1 g/L, the forming adhesion of the coating may decrease, and when the added amount of the silica exceeds 40 g/L, the effects of forming adhesion and corrosion resistance are likely to be saturated, which is uneconomical.

### [Phosphoric acid and Its salt]

Examples of the phosphoric acid and its salt include phosphoric acids such as orthophosphoric acid, metaphosphoric acid, pyrophosphoric acid, triphosphoric acid, and tetraphosphoric acid and salts thereof, ammonium salts such as triammonium phosphate and diammonium hydrogen phosphate, phosphonic acids such as aminotri(methylenephosphonic acid), 1-hydroxyethylidene-1,1-diphosphonic acid, ethylenediaminetetra(methylenephosphonic acid), and diethylenetriaminepenta(methylenephosphonic acid) and salts thereof, organic phosphoric acids such as phytic acid and salts thereof, and so on. Incidentally, as salts of phosphoric acid other than ammonium salts, there can be cited metal salts with Na, Mg, Al, K, Ca, Mn, Ni, Zn, Fe, and so on. The phosphoric acid and its salt may be used alone or in combination of two or more.

Incidentally, the content of the phosphoric acid and its salt is preferably 0 mass% or more and more preferably 1 mass% or more relative to the coating solid content, for example. Further, the content of the phosphoric acid and its salt is preferably 20 mass% or less and more preferably 10 mass% or less relative to the coating solid content, for example. When the content of the phosphoric acid and its salt exceeds 20 mass%, the coating becomes brittle and the work followability of the coating when the pre-coated steel sheet is molded may decrease.

### [Fluoride]

Examples of the fluoride include ammonium zirconium fluoride, ammonium silicofluoride, ammonium titanium fluoride, sodium fluoride, potassium fluoride, calcium fluoride, lithium fluoride, titanium hydrofluoride, zirconium hydrofluoride, and so on. Such fluorides may be used alone or in combination of two or more.

Incidentally, the content of the fluoride is preferably 0 mass% or more and more preferably 1 mass% or more relative to the coating solid content, for example. Further, the content of the fluoride is preferably 20 mass% or less and more preferably 10 mass% or less relative to the coating solid content, for example. When the content of the fluoride exceeds 20 mass%, the coating becomes brittle and the work followability of the coating when the pre-coated steel sheet is molded may decrease.

### [Vanadium compound]

Examples of the vanadium compound include vanadium compounds obtained by reducing pentavalent vanadium compounds such as vanadium pentoxide, metavanadic acid, ammonium metavanadate, sodium metavanadate, and vanadium oxytrichloride to 2 to 4 valences with a reducing agent, vanadium compounds with oxidation numbers of 4 to 2 valences, such as vanadium trioxide, vanadium dioxide, vanadium oxysulfate, vanadium oxyoxalate, vanadium oxyacetylacetonate, vanadium acetylacetonate, vanadium trichloride, phosphovanadomolybdic acid, vanadium sulfate, vanadium dichloride, and vanadium oxide, and so on. Such vanadium compounds may be used alone or in combination of two or more.

Incidentally, the content of the vanadium compound is preferably 0 mass% or more and more preferably 1 mass% or more relative to the coating solid content, for example. Further, the content of the vanadium compound is preferably 20 mass% or less and more preferably 10 mass% or less relative to the coating solid content, for example. When the content of the vanadium compound exceeds 20 mass%, the coating becomes brittle and the work followability of the coating when the pre-coated steel sheet is molded may decrease.

### [Tannin or tannic acid]

As the tannin or tannic acid, hydrolyzable tannin and condensed tannin both can be used. Examples of the tannin and the tannic acid include hamamelitannin, gall tannin, gallnut tannin, myrobalan tannin, divi-divi tannin, algarovilla tannin, valonia tannin, catechin, and so on. The added amount of the tannin or tannic acid in the chemical treatment agent for forming the chemical treatment coating layer 20 can be set to 2 to 80 g/L. When the added amount of the tannin or tannic acid is less than 2 g/L, the adhesion to the plated surface may be insufficient, leading to a decrease in the forming adhesion of the coating. Further, when the added amount of the tannin or tannic acid exceeds 80 g/L, the cohesive force of the chemical treatment coating may be insufficient, leading to a decrease in the forming adhesion of the coating.

Further, acid, alkali, or the like may be added to the chemical treatment agent for forming the chemical treatment coating layer 20 in order to adjust pH within a range that does not impair the performance.

Such a chemical treatment agent containing various components as above is applied to one surface or both surfaces of the zinc-based plated steel sheet 10 and then dried to form the chemical treatment coating layer 20 or the chemical treatment coating layers 20. In the pre-coated steel sheet according to this embodiment, it is preferable to form the chemical treatment coating layer 20 of 10 mg/m² or more per side on the Zn-containing plating layer 13. The coating weight of the chemical treatment coating layer 20 is more preferably 20 mg/m² or more and further preferably 50 mg/m² or more. Further, in the pre-coated steel sheet according to this embodiment, it is preferable to form the chemical treatment coating layer 20 of 1000 mg/m² or less per side on the Zn-containing plating layer 13. The coating weight of the chemical treatment coating layer 20 is more preferably 800 mg/m² or less and further preferably 600 mg/m² or less. Incidentally, the film thickness of the chemical treatment coating layer 20 corresponding to such a coating weight is about 0.01 to 1 µm, depending on the components contained in the chemical treatment agent. Incidentally, the film thickness of such a chemical treatment coating layer 20 can be measured by directly observing the cross section.

Incidentally, the application of such a chemical treatment agent as above can be performed by a commonly well-known coating method, such as, for example, roll coating, curtain flow coating, air spray, airless spray, immersion, bar coating, brush coating, or the like.

Further, the applied chemical treatment agent can be cured by a commonly well-known curing method (for example, a hot air baking device, an induction heating (IH) device, a near-infrared heating device, or the like). Further, these curing methods may also be used in combination.

Here, in forming the chemical treatment coating, the chemical treatment agent is generally applied onto a base (the zinc-based plated steel sheet 10 in this embodiment) and then heated, to thereby be cured. However, as in this embodiment, in order to form such a concentrated state of zirconium as will be explained in detail below in the vicinity of the interface of the coating layer 30 on the Zn-containing plating layer 13 side, it is necessary to preheat the zinc-based plated steel sheet 10 to a temperature above room temperature by heating it from a room temperature state, for example, when applying the chemical treatment agent. This makes it possible to increase the reactivity between the zirconium-containing component in the chemical treatment agent and the Zn-containing plating layer 13, and after the chemical treatment agent is applied, a highly reactive zirconium-concentrated layer is formed between the coating layer 30 and the Zn-containing plating layer 13.

It is important that the preheating temperature of the zinc-based plated steel sheet 10 when applying the chemical treatment agent should be a temperature higher than room temperature, and further, it is preferable to determine the preheating temperature according to the temperature of the chemical treatment agent to be applied. For example, it is preferable to preheat the zinc-based plated steel sheet 10 to a temperature of +5°C or higher and it is more preferable to preheat the zinc-based plated steel sheet 10 to a temperature of +10°C or higher, relative to the temperature of the chemical treatment agent to be applied.

On the other hand, when the preheating temperature of the zinc-based plated steel sheet is too high, the curing of the chemical treatment agent is accelerated too much, causing the cohesive force of the chemical treatment film to be insufficient, and the forming adhesion of the coating may decrease. Therefore, the preheating temperature of the zinc-based plated steel sheet 10 is preferably set to a temperature of +60°C or lower and more preferably set to a temperature of +50°C or lower relative to the temperature of the chemical treatment agent to be applied.

Further, the heating after the chemical treatment agent is applied (namely, the heating for curing the chemical treatment agent) is also necessary in order to keep the applied chemical treatment agent on the zinc-based plated steel sheet as a chemical treatment coating. Here, when the sheet temperature of the zinc-based plated steel sheet 10 becomes too high, the curing of the chemical treatment agent is accelerated too much, causing the cohesive force of the chemical treatment film to be insufficient, and the forming adhesion of the coating may decrease. In addition, when the chemical treatment agent is cured too much, thermal diffusion of zirconium into the coating layer 30 that is formed subsequently is hindered, failing to achieve such a concentrated state of zirconium as will be explained in detail below.

From the above viewpoints, it is preferable to determine the sheet temperature (peak metal temperature) of the zinc-based plated steel sheet 10 after the chemical treatment agent is applied according to the temperature of the chemical treatment agent to be applied. More specifically, the sheet temperature (peak metal temperature) of the zinc-based plated steel sheet 10 after the chemical treatment agent is applied is preferably set to +20°C or higher and more preferably set to +25°C or higher relative to the temperature of the chemical treatment agent to be applied (the temperature indicated by the chemical treatment agent when application begins). Further, the sheet temperature (peak metal temperature) of the zinc-based plated steel sheet 10 after the chemical treatment agent is applied is preferably set to +80°C or lower and more preferably set to +70°C or lower relative to the temperature of the chemical treatment agent to be applied (the temperature indicated by the chemical treatment agent when application begins).

Incidentally, the heating time is not particularly specified as long as the sheet temperature is within the above range, and it is only necessary to ensure an appropriate time required for a solvent contained in the chemical treatment agent to evaporate properly.

The chemical treatment coating layer 20 according to this embodiment has been explained above.

### <Regarding the coating layer 30>

The coating layer 30 is a layer located on the chemical treatment coating layer 20, and as will be explained in detail below, is a thick coating having an average thickness of 3 µm or more. Such a coating layer 30 contains a binder resin 301 being a film-forming component and resin particles 303 as schematically illustrated in FIG. 1A and FIG. 1B. The coating layer 30 contains the resin particles 303, thereby making it possible to mitigate impacts applied to the coating layer 30 due to the toughness and ductility that the resin particles 303 have and improve the scratch resistance (resistance to scratches, in particular) of the coating layer 30. Further, even if the coating layer 30 is scratched, the scratch can be prevented from reaching the Zn-containing plating layer 13, resulting in that it is possible to maintain the corrosion resistance of the pre-coated steel sheet 1.

In the pre-coated steel sheet 1 according to this embodiment, an average thickness (a thickness d_{c} in FIG. 1A and FIG. 1B) of such a coating layer 30 is 3 µm or more. When the average thickness of the coating layer 30 is less than 3 µm, the color tone of the zinc-based plated steel sheet 10 being a base material (more specifically, the color tone of the Zn-containing plating layer 13) is seen through the coating layer 30. The average thickness of the coating layer 30 is preferably 4 µm or more and more preferably 5 µm or more.

On the other hand, the average thickness of the coating layer 30 is 10 µm or less. When the average thickness of the coating layer 30 exceeds 10 µm, not only will it be costly, but also paint film defects such as bubbles may occur, making it difficult to obtain a stable appearance. Further, when the average thickness of the coating layer 30 exceeds 10 µm, the coating layer 30 becomes too thick and the adhesion of the coating layer decreases. The average thickness of the coating layer 30 is preferably 9 µm or less and more preferably 8 µm or less.

Incidentally, the average thickness of the coating layer 30 can be measured by directly observing the cross section. Specifically, the pre-coated steel sheet is embedded in a room-temperature drying-type epoxy resin so that its cross section can be observed, and the embedded surface is then mechanically polished and further finished to a mirror surface, and then observed with a SEM (Scanning Electron Microscope). At this time, the field of view in the SEM observation may be, for example, wide enough to be able to observe a range having a length of 60 µm in a direction orthogonal to the thickness direction. The thickness may be measured at any number of positions (for example, 10 positions), and the average value of a plurality of obtained thicknesses may be set as the thickness of the coating layer 30.

Further, the film thickness can be converted to the thickness of the coating layer per unit sputtering time by measuring the depth profile from the surface side of the coating layer of the pre-coated steel sheet to the steel sheet side using glow discharge optical emission spectrometry (GD-OES) and comparing the sputtering time corresponding to the profile of the coating layer 30 part with the previously-described thickness of the coating layer obtained by the SEM observation of the cross section.

Incidentally, in the depth profile obtained by the glow discharge optical emission spectrometry, the approximate position of the interface of the coating layer 30 on the Zn-containing plating layer 13 side can be understood as follows. That is, in the depth profile, the position where the intensity of a specific element (for example, Zn) contained in the Zn-containing plating layer 13 decreases from the peak value in the Zn-containing plating layer 13 and is halved can be understood to be the position of the interface of the coating layer 30 on the Zn-containing plating layer 13 side. Here, in specifying the position in such a depth profile as above, it is only necessary to obtain a depth profile at a plurality of positions (for example, 10 positions) of the Zn-containing plating layer 13 that draws attention, and then determine the position of the interface of the coating layer 30 on the Zn-containing plating layer 13 side based on the average value of measurement results obtained at the plural positions.

### <<Binder resin 301>>

As the binder resin 301 serving as a film-forming component in the coating layer 30 according to this embodiment, any material can be used as long as it functions as a binder for the resin particles 303. However, from the viewpoint of simplicity and cost-effectiveness of manufacture, it is preferable to use various organic resins. Examples of such a binder resin 301 include acrylic resins, polyester resins, urethane resins, fluorine-based resins, and so on. Further, in the coating layer 30 according to this embodiment, it is preferable to select as the binder resin 301 the same type of resin as the resin particles 303. This improves the affinity between the binder resin 301 and the resin particles 303 to make it possible to further improve the adhesion of the coating layer 30.

Further, the binder resin 301 according to this embodiment is preferably an organic resin having a glass transition temperature Tg of 30°C or higher. Such a resin having the glass transition temperature Tg as above is used as the binder resin 301, thereby making it possible to cause the coating layer 30 to have a more appropriate hardness and further improve the scratch resistance (particularly, resistance to scratching) of the pre-coated steel sheet 1.

The glass transition temperature Tg of the binder resin 301 is preferably 35°C or higher, and more preferably 40°C or higher. On the other hand, the upper limit value of the glass transition temperature Tg is not particularly specified. However, when the glass transition temperature Tg of the binder resin 301 exceeds 70°C, workability may decrease. Therefore, the glass transition temperature Tg of the binder resin 301 is preferably 70°C or lower.

Incidentally, such a glass transition temperature Tg can be determined, for example, by a method using TMA (thermomechanical analysis), in which a needle is inserted into the surface of a coating being an object to be measured in the direction of the coating thickness and a constant temperature change is caused to measure the change in thermal expansion of the object to be measured, a method using DMA (dynamic mechanical analysis), in which a coating being an object to be measured, which has been peeled off from a base material, is subjected to a constant temperature change while being subjected to periodic deformation, to analyze the viscoelasticity, or another method.

### <<Resin particle 303>>

The resin particles 303 in the coating layer 30 according to this embodiment are preferably resin particles made of an organic resin. As mentioned earlier, the toughness and ductility of the resin particles 303 make it possible to mitigate the impacts applied to the coating layer 30, resulting in that it is possible to further improve the scratch resistance of the pre-coated steel sheet 1. Examples of such resin particles include acrylic resin particles, polyester resin particles, urethane resin particles, fluorine-based resin particles, silicone resin particles, polyolefin resin particles, and so on. Among these resins, it is more preferable to use acrylic resin particles as the resin particles 303. Further, the coating layer 30 may further contain a color pigment as will be explained below, but such a color pigment itself may function as such resin particles 303 as above.

Incidentally, using inorganic particles made of an inorganic compound such as silica or ceramic in place of the resin particles 303 can also be considered. However, the inorganic particles are brittle particles, thus failing to obtain such an effect as above obtained by using the resin particles 303.

In the coating layer 30 according to this embodiment, the content of the resin particles 303 is preferably 5 mass % or more relative to the total content of the binder resin 301 and the resin particles 303. This makes it possible to further improve the scratch resistance. The content of the resin particles 303 in the coating layer 30 is more preferably 10 mass% or more and further preferably 11 mass% or more. On the other hand, the content of the resin particles 303 is 50 mass% or less relative to the total content of the binder resin 301 and the resin particles 303. This makes it possible to further improve the scratch resistance. When the content of the resin particles 303 is greater than 50 mass%, the proportion of the binder resin to the coating layer 30 becomes lower and the barrier property as the coating decreases to make it difficult to exhibit desired corrosion resistance. The content of the resin particles 303 in the coating layer 30 is more preferably 45 mass% or less and further preferably 15 mass% or less.

In the coating layer 30 according to this embodiment, the average particle diameter of the resin particles 303 is preferably within a range of 1.5 to 15.0 µm. The resin particles 303 having such an average particle diameter as above makes it possible to further improve the scratch resistance of the pre-coated steel sheet. The average particle diameter of the resin particles 303 is more preferably 3.0 µm or more and further preferably 5.0 µm or more. Further, the average particle diameter of the resin particles 303 is more preferably 10.0 µm or less and further preferably 8.0 µm or less.

Here, the average particle diameter of the resin particles 303 can be measured by directly observing the cross section. Specifically, the pre-coated steel sheet is embedded in a room-temperature drying-type epoxy resin so that its cross section can be observed, and the embedded surface is mechanically polished and then observed with a SEM (Scanning Electron Microscope). At this time, it is only necessary to measure the particle diameters of the resin particles 303 observed at any number of positions (for example, 10 positions), and set the average value of the obtained plural particle diameters as the average particle diameter of the resin particles 303.

### ◊ Average area ratio of the resin particles 303 in the cross section of the coating layer 30

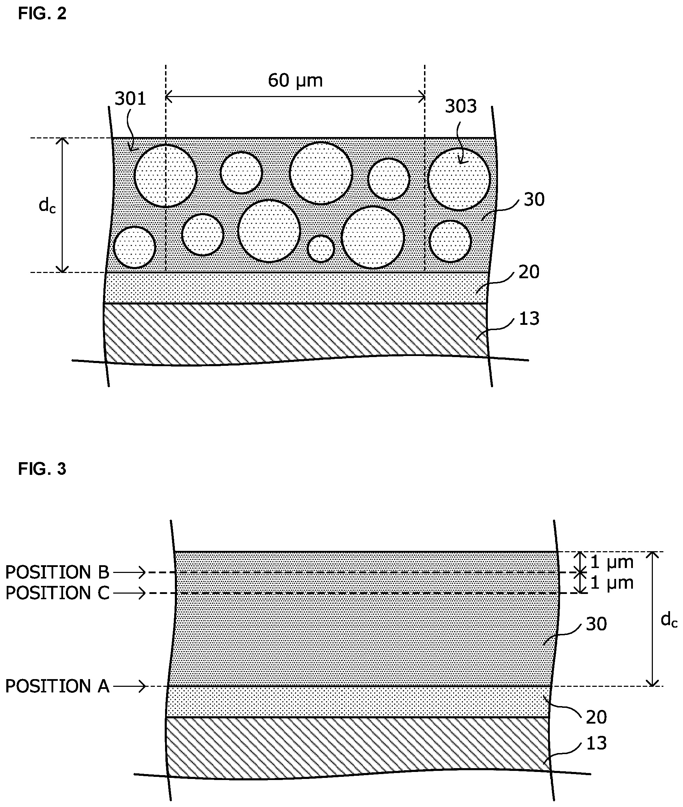

Next, there is explained an average area ratio of the resin particles 303 in the cross section of the coating layer 30 according to this embodiment with reference to FIG. 2. FIG. 2 is an explanatory view for explaining the coating layer 30 in the pre-coated steel sheet 1 according to this embodiment, and schematically illustrates a cross-section of the coating layer 30 according to this embodiment when cut in the thickness direction.

In the coating layer 30 according to this embodiment, the present inventors focus on the case of observing the cross section of the coating layer 30 cut in the thickness direction as illustrated in FIG. 2 as an example by a SEM. In this case, within a region having a length of 60 µm in a direction orthogonal to the thickness direction as illustrated in FIG. 2 (more specifically, within a region having an area of d_{c} × 60 µm as illustrated in FIG. 2), the average area ratio of the resin particles 303 within such a region is 5% or more and 30% or less.

When the average area ratio of the resin particles 303 is less than 5%, the proportion of the resin particles 303 present in the coating layer 30 becomes too low, thus failing to achieve desired scratch resistance and corrosion resistance as has been explained previously. The average area ratio of the resin particles 303 is set to 5% or more, thereby making it possible to achieve desired scratch resistance and corrosion resistance. The average area ratio of the resin particles 303 is preferably 8% or more and more preferably 11% or more.

On the other hand, when the average area ratio of the resin particles 303 is greater than 30%, the proportion of the resin particles 303 present in the coating layer 30 becomes too high, and as a result, although it is possible to achieve desired scratch resistance, it is not possible to achieve both scratch resistance and corrosion resistance. The average area ratio of the resin particles 303 is set to 30% or less, thereby making it possible to achieve desired scratch resistance and corrosion resistance. The average area ratio of the resin particles 303 is preferably 25% or less and more preferably 20% or less.

Further, in the coating layer 30 according to this embodiment, it is more preferable that the average particle diameter of the resin particles 303 should be within a range of 3.0 to 10.0 µm, the content of the resin particles 303 in the coating layer 30 should be 5 to 15 mass% relative to the total content of the binder resin 301 and the resin particles 303, and the average thickness of the coating layer 30 should be within a range of 4 to 8 µm. In the coating layer 30 according to this embodiment, the above-described various conditions are satisfied, thereby making it possible to achieve a more preferable dispersion state of the resin particles 303 and achieve a more preferable average area ratio of the resin particles 303.

Here, the average area ratio of the resin particles 303 described above can be measured by directly observing the cross section. Specifically, the pre-coated steel sheet 1 is embedded in a room-temperature drying-type epoxy resin so that its cross section can be observed, and the embedded surface is then mechanically polished and further finished to a mirror surface, and then observed with a SEM (Scanning Electron Microscope). When observing a cross section of the coating layer cut in the thickness direction at an arbitrary position, a region having a length of 60 µm is specified in a direction orthogonal to the thickness direction, and the area of the coating layer 30 within that region and the total area of the resin particles 303 are measured. The total area of the resin particles 303 obtained is divided by the area of the coating layer 30, thereby making it possible to calculate the area ratio of the resin particles 303 at such an observation position. Such measurement is performed at any number of positions (for example, 10 positions), and the average value of the plural area ratios obtained at the measurement positions is calculated. The average value obtained in this manner is set as the average area ratio of the resin particles 303.

### ◊ Distribution state of zirconium in the coating layer 30

In the pre-coated steel sheet 1 according to this embodiment, as will be explained below, a paint for forming the coating layer 30 is applied to the surface of the zinc-based plated steel sheet 10 with the chemical treatment coating layer 20 formed thereon, and then such a paint is cured and dried, and thereby the coating layer 30 is formed. In such a curing and drying step, the paint is baked at a predetermined temperature. Due to the heat applied in such a curing and drying step, the components contained in the Zn-containing plating layer 13, the components contained in the chemical treatment coating layer 20, and the components contained in the paint to be the coating layer 30 thermally diffuse into each other, resulting in that zirconium elements derived from the chemical treatment coating layer 20 come to be present in the coating layer 30. In particular, as has been explained previously, when forming the chemical treatment coating layer 20, the preheating and the heating are performed under specific conditions, and thereby a highly reactive zirconium-concentrated layer is formed. As a result, a specific zirconium distribution state is achieved in the pre-coated steel sheet 1 by going through such a curing and drying step.

In this embodiment, the present inventors focus on such a distribution state of zirconium in the coating layer 30 as above. The distribution state of zirconium in the coating layer 30 according to this embodiment will be explained below with reference to FIG. 3. FIG. 3 is an explanatory view for explaining the coating layer of the pre-coated steel sheet according to this embodiment, which schematically illustrates a cross section of the coating layer 30 according to this embodiment cut in the thickness direction. Incidentally, in FIG. 3, the coating layer 30 is illustrated while omitting the distinction between the binder resin 301 and the resin particles 303 in the coating layer 30 for convenience.

In this embodiment, in order to understand the distribution state of zirconium in the coating layer 30, a depth profile is measured using glow discharge optical emission spectrometry (GD-OES).

Here, in measuring the depth profile, first, a sample is cut to a required measurement size (for example, 50 mm). Then, the obtained measurement sample is measured under the following measurement conditions, focusing on the zirconium element. The measurement may be performed using a glow discharge optical emission surface analyzer (for example, a Marcus-type high-frequency glow discharge light emitting surface analyzer GD-Profiler 2 manufactured by HORIBA JOBIN YVON S.A.S.) under conditions of a gas replacement time of 30 seconds, a pre-sputtering time of 30 seconds, a pressure of 600 Pa, and an output of 35 W, until the spectrum of iron derived from the base steel is detected as an intensity.

The measurements are performed as above, thereby making it possible to understand the distribution state of the zirconium element along the thickness direction of the coating layer 30. Based on the obtained measurement results of the depth profile, the depth position (or sputtering time) of the coating layer 30 is taken on the horizontal axis and the emission intensity calculated based on the obtained measurement results is taken on the vertical axis, thereby making it possible to visualize the depth profile for zirconium in GD-OES.

In this embodiment, in the depth profile for zirconium obtained as above, the position where the emission intensity is maximum (the peak position when the depth profile is viewed macroscopically) is defined as the interface of the coating layer 30 on the Zn-containing plating layer 13 side (corresponding to a position A in FIG. 3, for example). Then, the emission intensity at such a position is set as the intensity of zirconium at the interface of the coating layer 30 on the Zn-containing plating layer 13 side (the position A in FIG. 3). Incidentally, in GD-OES, the value of emission intensity may fluctuate due to the characteristics of the measurement method. Therefore, in this embodiment, the maximum value of the emission intensity calculated based on the depth profile is treated as the intensity of zirconium.

Further, in this embodiment, in the depth profile for zirconium obtained as above, in a range of 1 µm or more and 2 µm or less from the surface of the coating layer 30 toward the thickness direction of the coating layer 30 (the range from a position B to a position C in FIG. 3), the average value of the emission intensities in the corresponding range (to be referred to as "average intensity") is calculated. Then, the obtained average intensity is used as a criterion for examining the "intensity of zirconium at the interface of the coating layer 30 on the Zn-containing plating layer 13 side" as above. Incidentally, in such measurement by GD-OES as above, it is only necessary to perform the measurements at a plurality of positions (for example, 10 positions) of the coating layer 30 that draws attention, and use the average value of the measurement results obtained at the plural positions as such an average intensity as above.

In the coating layer 30 according to this embodiment, the intensity of zirconium at the interface of the coating layer 30 on the Zn-containing plating layer 13 side obtained as above is equal to or more than 1.05 times and equal to or less than 3.00 times the average intensity of zirconium in the range of 1 µm or more and 2 µm or less from the surface of the coating layer 30 toward the thickness direction of the coating layer 30.

The fact that such an intensity ratio as above is 1.05 times or more and 3.00 times or less suggests that, in the coating layer 30 according to this embodiment, zirconium is concentrated in the interface portion of the coating layer 30 on the Zn-containing plating layer 13 side. In the pre-coated steel sheet 1 according to this embodiment, zirconium is in such a concentrated state, which contributes to improving the adhesion of the coating layer 30. As a result, even in the case where the film thickness is thick, which means that the average thickness of the coating layer 30 is 3 µm or more and 10 µm or less, it is possible to achieve a further improvement in the paint film adhesion.

When such an intensity ratio as above is less than 1.05 times, the concentrated state of zirconium in the coating layer 30 is insufficient, failing to obtain such an effect of improving paint film adhesion as above. Such an intensity ratio as above is preferably 1.07 times or more and more preferably 1.10 times or more.

On the other hand, when such an intensity ratio as above is greater than 3.00 times, the cohesive force of the chemical treatment coating layer may be insufficient, leading to a decrease in the forming adhesion of the coating layer, which is not preferable. Such an intensity ratio as above is preferably 2.50 times or less and more preferably 2.00 times or less.

### ◊ Regarding the other components in the coating layer 30

In addition to such components as above, the coating layer 30 according to this embodiment may further contain at least one of a color pigment and a crosslinking agent.

The coating layer 30 according to this embodiment further contains a crosslinking agent, thereby making it possible to further improve the barrier property of the coating layer 30 itself and further improve the scratch resistance and the corrosion resistance as the pre-coated steel sheet 1. In particular, the coating layer 30 contains at least one of a melamine resin and an isocyanate resin as the crosslinking agent, thereby making it possible to further improve the scratch resistance and the corrosion resistance as the pre-coated steel sheet 1. The content of such a crosslinking agent is preferably set to about 5 to 40 mass%, for example.

Further, the coating layer 30 according to this embodiment further contains a color pigment, thereby making it possible to cause the coating layer 30 to have a desired color tone and further improve the design of the pre-coated steel sheet 1.

Incidentally, the color pigment to be contained in the coating layer 30 is not particularly limited, and various well-known pigments can be appropriately used depending on the color tone desired for the coating layer 30. Examples of such color pigments include an aluminum pigment, carbon black, TiO₂, and so on. Further, the content of such color pigments can also be set appropriately, which is about 3 to 60 mass%, for example.

Further, the coating layer 30 according to this embodiment may further contain additives such as a rust preventive pigment, surface-modified metal powders or glass powders, a dispersing agent, a leveling agent, wax, and aggregates, a diluting solvent, and so on as necessary, within the range that does not impair the above-described effects.

Here, when the rust preventive pigment is contained, its content is preferably set to 1 to 15 mass%, for example. Further, as the rust preventive pigment to be used, various well-known rust preventive pigments can be used.

Such a coating layer 30 can be formed by applying a paint component containing the components that form such a coating layer 30 as above onto the surface of the zinc-based plated steel sheet 10 including the chemical treatment coating layer 20, and then baking the applied component at a temperature of 150°C or higher and lower than 300°C, followed by hardening and drying. When the baking temperature is lower than 150°C, bake hardening is insufficient and the corrosion resistance and the scratch resistance of the coating layer may decrease, and further it is difficult to diffuse zirconium sufficiently, failing to achieve such a specific zirconium distribution state as above. On the other hand, when the baking temperature is 300°C or higher, thermal degradation of the resin component may occur to cause a decrease in workability, and further zirconium diffuses too much, resulting in failing to achieve such a specific zirconium distribution state as above.

The heating time is not particularly specified as long as the heating temperature is within the above-described range, and it is only necessary to ensure an appropriate time required for a solvent contained in the paint component to evaporate properly.

Incidentally, the application of such a paint component as above can be performed by a commonly well-known coating method, such as, for example, roll coating, curtain flow coating, air spray, airless spray, immersion, bar coating, brush coating, or the like.

◊ Regarding the hardness of the coating layer 30

It is preferable that such a coating layer 30 should have a Vickers hardness of 10 to 70 Hv, which is measured at an indentation depth of three-quarters of the thickness of the coating from the surface layer (regarding the test load, a size capable of achieving a desired indentation depth is set according to the hardness of the coating layer 30). Such a Vickers hardness is measured using a universal hardness tester (manufactured by Helmut Fischer Gmbh). The hardness is measured from the surface of the coating at any 10 positions under such indentation depth conditions as above, regardless of the position where the resin particle 303 is present or absent, and the average of 10 measured values obtained is calculated. The coating layer 30 has such a Vickers hardness as above, thereby making it possible to further improve the scratch resistance. The above-described Vickers hardness exhibited by the coating layer 30 is more preferably 15 to 65 Hv.

The pre-coated steel sheet according to this embodiment has been explained in detail above with reference to FIG. 1A to FIG. 3.

Incidentally, in the above-described embodiment, attention has been focused on the case where the zinc-based plated steel sheet is used as the base material of the pre-coated steel sheet, but the present invention as explained above may also be applied to various metal sheets other than steel sheets, such as aluminum sheets, zinc sheets, stainless steel sheets, and titanium sheets. That is, such chemical treatment coating layer 20 and coating layer 30 as above may be provided on the surface of various metal sheets other than steel sheets.

### EXAMPLE

The pre-coated steel sheet according to the present invention will be specifically explained below with reference to examples and comparative examples. Incidentally, the examples to be explained below are merely examples of the pre-coated steel sheet according to the present invention, and the pre-coated steel sheet according to the present invention is not limited to the examples below.

### (1) Zinc-based plated steel sheet

As the base sheet for the pre-coated steel sheet, six types of zinc-based plated steel sheets A1 to A6 illustrated in Table 1 below (all commercially available) were used. The plating coating weight in the table is the plating coating weight per side. The Zn-containing plating layers of the following zinc-based plated steel sheets each were sprayed for 5 seconds with a commercially available sodium orthosilicate alkaline cleaning solution, rinsed with water, and dried.

### [Table 1]

**TABLE1**

| TYPE | ZINC-BASED PLATED STEEL SHEET (% REPRESENTS MASS%.) |
|---|---|
| A1 | HOT-DIP Zn-11%Al-3%Mg-0.2%Si PLATED STEEL SHEET (PLATING COATING WEIGHT 135 g/m² PER SIDE) |
| A2 | HOT-DIP GALVANIZED STEEL SHEET (PLATING COATING WEIGHT 135 g/m² PER SIDE) |
| A3 | HOT-DIP Zn-6%Al-3%Mg PLATED STEEL SHEET (PLATING COATING WEIGHT 90 g/m² PER SIDE) |
| A4 | HOT-DIP Zn-55%Al-2%Mg-1.6%Si PLATED STEEL SHEET (PLATING COATING WEIGHT 75 g/m² PER SIDE) |
| A5 | HOT-DIP Zn-55%Al-1.6%Si PLATED STEEL SHEET (PLATING COATING WEIGHT 75 g/m² PER SIDE) |
| A6 | ALLOYED HOT-DIP GALVANIZED STEEL SHEET (PLATING COATING WEIGHT 50 g/m² PER SIDE) |

### (2) Chemical treatment coating layer

A chromate-free chemical treatment agent containing zirconium (a chemical treatment agent consisting of ammonium zirconium carbonate, a silane coupling agent, a phosphoric acid compound, a vanadium compound, an epoxy resin, and so on) or a chromate-free chemical treatment agent not containing zirconium (a chemical treatment agent consisting of tannic acid, a silane coupling agent, silica fine particles, a polyester resin, and so on) was prepared. The above-described zinc-based plated steel sheets were preheated to a temperature above room temperature under the preheating conditions illustrated in Table 7-1 and Table 7-2 below, and then the chemical treatment agent was applied to the zinc-based plated steel sheets so that the coating weight per side was 100 mg/m². Then, the chemical treatment agents were dried and cured at the heating temperatures illustrated in Table 7-1 and Table 7-2 below, and chemical treatment coating layers were formed.

Incidentally, in Table 7-1 and Table 7-2 below, the preheating temperature of the zinc-based plated steel sheet and the peak metal temperature after application are each illustrated as a relative temperature based on the temperature of the chemical treatment agent, and the description of sign "+" is omitted. Incidentally, regarding the example of No. 42, preheating to a temperature above room temperature was not performed, and thus the columns for preheating temperature and peak metal temperature are marked with "-."

### (3) Preparation of the paint component for forming coating layer

The paint component to be used for forming the coating layer was prepared. As the binder resin that functions as the film-forming component, ones equivalent to the resins illustrated in Table 2 below were prepared. As the crosslinking agent for each resin solution, ones equivalent to the crosslinking agents illustrated in Table 3 below were prepared. Further, as the resin particles, ones equivalent to the resin particles illustrated in Table 4 below were prepared. Further, as the color pigment, ones equivalent to the titanium oxide and carbon black (CB) illustrated in Table 5 below were prepared. Further, as the rust preventive pigment, one equivalent to the rust preventive pigment illustrated in Table 6 below was prepared. These paint components were blended to have the contents illustrated in Table 7-1 and Table 7-2 below. Incidentally, the balance of the contents illustrated in Table 7-1 and Table 7-2 is the content of the binder resin.

### [Table 2]

**TABLE 2**

| TYPE | BINDER RESIN |
|---|---|
| B1 | "ALMATEX E208" MANUFACTURED BY MITSUI CHEMICALS, INC. (AQUEOUS ACRYLIC RESIN) |
| B2 | "ALMATEX E255" MANUFACTURED BY MITSUI CHEMICALS, INC. (AQUEOUS ACRYLIC RESIN) |
| B3 | "VYLONAL MD-1480" MANUFACTURED BY TOYOBO CO., LTD. (AQUEOUS POLYESTER RESIN) |
| B4 | "SUPER FLEX 150" MANUFACTURED BY DKS CO. LTD.Co. (AQUEOUS URETHANE RESIN) |

### [Table 3]

**TABLE 3**

| TYPE | CROSSLINKING AGENT |
|---|---|
| C1 | "NIKALAC MX-035" MANUFACTURED BY SANWA CHEMICALS CO., LTD. (MELAMINE RESIN FOR WATER-BASED PAINT) |
| C2 | "ELASTRON BN-69" MANUFACTURED BY DKS CO. LTD.Co. (BLOCKED ISOCYANATE) |
| C3 | MIX B1 AND B2 AT 1: 1 |
| C4 | "KBM-603" MANUFACTURED BY SHIN-ETSU CHEMICAL CO., LTD. (SILANE COUPLING AGENT) |

### [Table 4]

**TABLE 4**

| TYPE | RESIN PARTICLE |
|---|---|
| D1 | "SSX-101" MANUFACTURED BY SEKISUI KASEI CO., LTD. (ACRYLIC RESIN PARTICLE, AVERAGE PARTICLE DIAMETER 1 µm) |
| D2 | "MZ-5HN" MANUFACTURED BY SOKEN CHEMICAL & ENGINEERING CO., LTD. (ACRYLIC RESIN PARTICLE, AVERAGE PARTICLE DIAMETER 5 µm) |
| D3 | "BM30X-8" MANUFACTURED BY SEKISUI KASEI CO., LTD. (ACRYLIC RESIN PARTICLE, AVERAGE PARTICLE DIAMETER 8 µm) |
| D4 | "MZ-12H" MANUFACTURED BY SOKEN CHEMICAL & ENGINEERING CO., LTD. (ACRYLIC RESIN PARTICLE, AVERAGE PARTICLE DIAMETER 12 µm) |
| D5 | "HPS-1000" MANUFACTURED BY TOAGOSEI CO., LTD. (SILICA PARTICLE, AVERAGE PARTICLE DIAMETER 1 µm) |
| D6 | "CHEMIPEARL W800" MANUFACTURED BY MITSUI CHEMICALS, INC. (POLYOLEFIN RESIN PARTICLE, AVERAGE PARTICLE DIAMETER 8 µm) |
| D7 | "P-800T" MANUFACTURED BY NEGAMI CHEMICAL INDUSTRIAL CO., LTD. (URETHANE RESIN PARTICLE, AVERAGE PARTICLE DIAMETER 6 µm) |

### [Table 5]

**TABLE 5**

| TYPE | COLOR PIGMENT |
|---|---|
| E1 | TITANIUM OXIDE "TIPAQUE R-980" MANUFACTURED BY ISHIHARA SANGYO KAISHA, LTD. |
| E2 | CARBON BLACK "MCF #950" MANUFACTURED BY MITSUBISHI CHEMICAL CORPORATION |

### [Table 6]

**TABLE 6**

| TYPE | RUST PREVENTIVE AGENT |
|---|---|
| F1 | CONDENSED ALUMINUM PHOSPHATE "K-WHITE #105" MANUFACTURED BY TAYCA CORPORATION AVERAGE PARTICLE DIAMETER 1.6 µm |

The paint component for forming coating layer prepared as above was applied to the surface of the zinc-based plated steel sheet with the chemical treatment coating layer provided thereon so that the average thickness after drying was the value illustrated in Table 7-1 and Table 7-2, and then the paint component was heated at a temperature of 150°C or higher and lower than 300°C, to thereby be cured and dried.

### [Table 7-1]

**TABLE 7-1**

| No. | BASE SHEET | CHEMICAL TREATMENT COATING LAYER | | | | COATING LAYER | | | | | | | | | | | | | NOTE |
|---|---|---|---|---|---|---|---|---|---|---|---|---|---|---|---|---|---|---|---|
| | TYPE | PRESENCE /ABSENCE | Zr PRESENCE /ABSENCE | PREHEATING TEMPERA TURE [°C] | PEAK METAL TEMPERA TURE [°C] | AVERAGE THICK NESS [µm] | GD-OES INTENSITY RATIO | BINDER RESIN | RESIN PARTICLE | | | | CROSSLINKING AGENT | | COLOR PIGMENT | | RUST PREVENTIVE PIGMENT | | |
| | | | | | | | | TYPE | PARTICLE TYPE | AVERAGE PARTICLE DIAMETER [µm] | CONTENT [MASS%] | AVERAGE AREA RATIO [%] | TYPE | CONTENT [MASS%] | TYPE | CONTENT [MASS%] | TYPE | CONTENT [MASS%] | |
| 1 | A1 | PRESENCE | PRESENCE | 10 | 25 | 2 | 1.05 | B1 | D3 | 5.0 | 35 | 15 | C1 | 15 | E1 | 25 | - | 0 | COMPARATIVE EXAMPLE |
| 2 | A1 | PRESENCE | PRESENCE | 10 | 25 | 3 | 1.32 | B1 | D3 | 5.0 | 35 | 15 | C1 | 15 | E1 | 25 | - | 0 | EXAMPLE |
| 3 | A1 | PRESENCE | PRESENCE | 10 | 25 | 4 | 1.29 | B1 | D3 | 5.0 | 35 | 15 | C1 | 15 | E1 | 25 | - | 0 | EXAMPLE |
| 4 | A1 | PRESENCE | PRESENCE | 10 | 25 | 5 | 1.60 | B1 | D3 | 5.0 | 35 | 15 | C1 | 15 | E1 | 25 | - | 0 | EXAMPLE |
| 5 | A1 | PRESENCE | PRESENCE | 10 | 25 | 8 | 1.42 | B1 | D3 | 5.0 | 35 | 15 | C1 | 15 | E1 | 25 | - | 0 | EXAMPLE |
| 6 | A1 | PRESENCE | PRESENCE | 10 | 25 | 9 | 1.48 | B1 | D3 | 5.0 | 35 | 15 | C1 | 15 | E1 | 25 | - | 0 | EXAMPLE |
| 7 | A1 | PRESENCE | PRESENCE | 10 | 25 | 10 | 1.09 | B1 | D3 | 5.0 | 35 | **15** | C1 | 15 | E1 | 25 | - | 0 | EXAMPLE |
| 8 | A1 | PRESENCE | PRESENCE | 10 | 25 | 11 | 1.15 | B1 | D3 | 5.0 | 35 | 15 | C1 | 15 | E1 | 25 | - | 0 | COMPARATIVE EXAMPLE |
| 9 | A1 | PRESENCE | PRESENCE | 1 | 15 | 6 | 1.01 | B1 | D3 | 5.0 | 35 | **15** | C1 | 15 | E1 | 25 | - | 0 | COMPARATIVE EXAMPLE |
| 10 | A1 | PRESENCE | PRESENCE | 5 | 20 | 6 | 1.05 | B1 | D3 | 5.0 | 35 | 15 | C1 | 15 | E1 | 25 | - | 0 | EXAMPLE |
| 11 | A1 | PRESENCE | PRESENCE | 9 | 22 | 6 | 1.07 | B1 | D3 | 5.0 | 35 | 15 | C1 | 15 | E1 | 25 | - | 0 | EXAMPLE |
| 12 | A1 | PRESENCE | PRESENCE | 15 | 30 | 6 | 1.11 | B1 | D3 | 5.0 | 35 | 15 | C1 | 15 | E1 | 25 | - | 0 | EXAMPLE |
| 13 | A1 | PRESENCE | PRESENCE | 20 | **40** | 6 | 1.98 | B1 | D3 | 5.0 | 35 | 15 | C1 | 15 | E1 | 25 | - | 0 | EXAMPLE |
| 14 | A1 | PRESENCE | PRESENCE | 7 | 25 | 6 | 2.49 | B1 | D3 | 5.0 | 35 | 15 | C1 | 15 | E1 | 25 | - | 0 | EXAMPLE |
| 15 | A1 | PRESENCE | PRESENCE | 5 | 20 | 6 | 2.99 | B1 | D3 | 5.0 | 35 | 15 | C1 | 15 | E1 | 25 | - | 0 | EXAMPLE |
| 16 | A1 | PRESENCE | PRESENCE | 2 | 90 | 6 | 3.23 | B1 | D3 | 5.0 | 35 | 15 | C1 | 15 | E1 | 25 | - | 0 | COMPARATIVE EXAMPLE |
| 17 | A1 | PRESENCE | PRESENCE | 60 | 80 | 6 | 2.23 | B1 | D3 | 5.0 | 35 | 15 | C1 | 15 | E1 | 25 | - | 0 | EXAMPLE |
| 18 | A1 | PRESENCE | PRESENCE | 70 | 90 | 6 | 3.11 | B1 | D3 | 5.0 | 35 | 15 | C1 | 15 | E1 | 25 | - | 0 | COMPARATIVE EXAMPLE |
| 19 | A1 | PRESENCE | PRESENCE | 10 | 25 | 6 | 1.50 | B1 | D3 | 5.0 | 35 | 2 | C1 | 15 | E1 | 25 | - | 0 | COMPARATIVE EXAMPLE |
| 20 | A1 | PRESENCE | PRESENCE | 10 | 25 | 6 | 1.26 | B1 | D3 | 5.0 | 35 | 11 | C1 | 15 | E1 | 25 | - | 0 | EXAMPLE |
| 21 | A1 | PRESENCE | PRESENCE | 10 | 25 | | 1.64 | B1 | D3 | 5.0 | 35 | 12 | C1 | 15 | E1 | 25 | - | 0 | EXAMPLE |
| 22 | A1 | PRESENCE | PRESENCE | 10 | 25 | 6 | 1.23 | B1 | D3 | 5.0 | 35 | 11 | C1 | 15 | E1 | 25 | - | 0 | EXAMPLE |
| 23 | A1 | PRESENCE | PRESENCE | 10 | 25 | 6 | 1.61 | B1 | D3 | 5.0 | 35 | 20 | C1 | 15 | E1 | 25 | - | 0 | EXAMPLE |
| 24 | A1 | PRESENCE | PRESENCE | 10 | 25 | 6 | 1.63 | B1 | D3 | 5.0 | 35 | 25 | C1 | 15 | E1 | 25 | - | 0 | EXAMPLE |
| 25 | A1 | PRESENCE | PRESENCE | 10 | 25 | 6 | 1.05 | B1 | D3 | 5.0 | 35 | 30 | C1 | 15 | E1 | 25 | - | 0 | EXAMPLE |
| 26 | A1 | PRESENCE | PRESENCE | 10 | 25 | 6 | 1.08 | B1 | D3 | 5.0 | 35 | 35 | C1 | 15 | E1 | 25 | - | 0 | COMPARATIVE EXAMPLE |
| 27 | A1 | PRESENCE | PRESENCE | 10 | 25 | 6 | 1.30 | B1 | D3 | 5.0 | 35 | 15 | - | 0 | E1 | 25 | - | 0 | EXAMPLE |

### [Table 7-2]

**TABLE 7-2**

| No. | BASE SHEET | CHEMICAL TREATMENT COATING LAYER | | | | COATING LAYER | | | | | | | | | | | | | NOTE |
|---|---|---|---|---|---|---|---|---|---|---|---|---|---|---|---|---|---|---|---|
| | TYPE | PRESENCE /ABSENCE | Zr PRESENCE /ABSENCE | PREHEATING TEMPERA TURE [°C] | PEAK METAL TEMPERA TURE [°C] | AVERAGE THICK NESS [µm] | GD-OES INTENSITY RATIO | BINDER RESIN | RESIN PARTICLE | | | | CROSSLINKING AGENT | | COLOR PIGMENT | | RUST PREVENTIVE PIGMENT | | |
| | | | | | | | | TYPE | PARTICLE TYPE | AVERAGE PARTICLE DIAMETER [µm] | CONTENT [MASS%] | AVERAGE AREA RATIO [%] | TYPE | CONTENT [MASS%] | TYPE | CONTENT [MASS%] | TYPE | CONTENT [MASS%] | |
| 28 | A1 | PRESENCE | PRESENCE | 10 | 25 | 6 | 1.54 | B1 | D3 | 5.0 | 35 | 15 | C1 | 15 | E2 | 25 | - | 0 | EXAMPLE |
| 29 | A1 | PRESENCE | PRESENCE | 10 | 25 | 6 | 1.23 | B1 | D3 | 5.0 | 35 | 15 | C1 | 15 | E1 | 25 | F1 | 5 | EXAMPLE |
| 30 | A1 | PRESENCE | PRESENCE | 10 | 25 | 6 | 1.68 | B1 | D3 | 5.0 | 35 | 15 | C2 | 15 | E1 | 25 | - | 0 | EXAMPLE |
| 31 | A1 | PRESENCE | PRESENCE | 10 | 25 | 6 | 1.20 | B1 | D3 | 5.0 | 35 | 15 | C3 | 15 | E1 | 25 | - | 0 | EXAMPLE |
| 32 | A1 | PRESENCE | PRESENCE | 10 | 25 | 6 | 1.67 | B1 | D3 | 5.0 | 35 | 15 | C4 | 15 | E1 | 25 | - | 0 | EXAMPLE |
| 33 | A1 | PRESENCE | PRESENCE | 10 | 25 | 6 | 1.65 | B2 | D3 | 5.0 | 35 | 15 | C1 | 15 | E1 | 25 | - | 0 | EXAMPLE |
| 34 | A1 | PRESENCE | PRESENCE | 10 | 25 | 6 | 1.50 | B3 | D7 | 60 | 35 | 15 | C1 | 15 | E1 | 25 | - | 0 | EXAMPLE |
| 35 | A1 | PRESENCE | PRESENCE | 10 | 25 | 6 | 1.51 | B4 | D7 | 6.0 | 35 | 15 | C1 | 15 | E1 | 25 | - | 0 | EXAMPLE |
| 36 | A1 | PRESENCE | PRESENCE | 10 | 25 | 6 | 1.28 | B1 | D1 | 1.0 | 35 | 15 | C1 | 15 | E1 | 25 | - | 0 | EXAMPLE |
| 37 | A1 | PRESENCE | PRESENCE | 10 | 25 | 6 | 1.28 | B1 | D2 | 3.0 | 35 | 15 | C1 | 15 | E1 | 25 | - | 0 | EXAMPLE |
| 38 | A1 | PRESENCE | PRESENCE | 10 | 25 | 6 | 1.38 | B1 | D3 | 5.0 | 35 | 15 | C1 | 15 | E1 | 25 | - | 0 | EXAMPLE |
| 39 | A1 | PRESENCE | PRESENCE | 10 | 25 | 6 | 1.22 | B1 | D4 | 8.0 | 35 | 15 | C1 | 15 | E1 | 25 | - | 0 | EXAMPLE |
| 40 | A1 | PRESENCE | PRESENCE | 10 | 25 | 6 | 1.25 | B1 | D5 | 10.0 | 35 | 15 | C1 | 15 | E1 | 25 | - | 0 | EXAMPLE |
| 41 | A1 | PRESENCE | PRESENCE | 10 | 25 | 6 | 1.67 | B1 | D6 | 15.0 | 35 | 15 | C1 | 15 | E1 | 25 | - | 0 | EXAMPLE |
| 42 | A1 | - | - | - | - | 6 | 0.84 | B1 | D3 | 5.0 | 35 | 15 | C1 | 15 | E1 | 25 | - | 0 | COMPARATIVE EXAMPLE |
| 43 | A1 | PRESENCE | ABSENCE | 10 | 25 | 6 | 0.75 | B1 | D3 | 5.0 | 35 | 15 | C1 | 15 | E1 | 25 | - | 0 | COMPARATIVE EXAMPLE |
| 44 | A2 | PRESENCE | PRESENCE | 10 | 25 | 6 | 1.63 | B1 | D3 | 5.0 | 35 | 15 | C1 | 15 | E1 | 25 | - | 0 | EXAMPLE |
| 45 | A3 | PRESENCE | PRESENCE | 10 | 25 | 6 | 1.42 | B1 | D3 | 5.0 | 35 | 15 | C1 | 15 | E1 | 25 | - | 0 | EXAMPLE |
| 46 | A4 | PRESENCE | PRESENCE | 10 | 25 | 6 | 1.18 | B1 | D3 | 5.0 | 35 | 15 | C1 | 15 | E1 | 25 | - | 0 | EXAMPLE |
| 47 | A5 | PRESENCE | PRESENCE | 10 | 25 | 6 | 1.07 | B1 | D3 | 5.0 | 35 | 15 | C1 | 15 | E1 | 25 | - | 0 | EXAMPLE |
| 48 | A6 | PRESENCE | PRESENCE | 10 | 25 | 6 | 1.60 | B1 | D3 | 5.0 | 35 | 15 | C1 | 15 | E1 | 25 | - | 0 | EXAMPLE |
| 49 | A1 | PRESENCE | PRESENCE | 10 | 25 | 6 | 1.25 | B1 | D2 | 5.0 | 5 | 20 | C1 | 15 | E1 | 50 | - | 0 | EXAMPLE |
| 50 | A1 | PRESENCE | PRESENCE | 10 | 25 | 6 | 1.31 | B1 | D2 | 5.0 | 10 | 20 | C1 | 15 | E1 | 40 | - | 0 | EXAMPLE |
| 51 | A1 | PRESENCE | PRESENCE | 10 | 25 | 6 | 1.51 | B1 | D2 | 5.0 | 11 | 20 | C1 | 15 | E1 | 35 | - | 0 | EXAMPLE |
| 52 | A1 | PRESENCE | PRESENCE | 10 | 25 | 6 | 1.48 | B1 | D2 | 5.0 | 15 | 20 | C1 | 15 | E1 | 35 | - | 0 | EXAMPLE |
| 53 | A1 | PRESENCE | PRESENCE | 10 | 25 | 6 | 1.41 | B1 | D2 | 5.0 | 45 | 20 | C1 | 15 | E1 | 20 | - | 0 | EXAMPLE |
| 54 | A1 | PRESENCE | PRESENCE | 10 | 25 | 6 | 1.37 | B1 | D2 | 5.0 | 50 | 20 | C1 | 15 | E1 | 20 | - | 0 | EXAMPLE |

For each of the obtained pre-coated steel sheets, the depth profile was measured by GD-OES, the peak intensity ratio was calculated, and the average area ratio of the resin particles was measured in accordance with the previously-described methods. The results obtained are illustrated in Table 7-1 and Table 7-2 above collectively.

Further, using each of the paint components used and each of the pre-coated steel sheets obtained, a color-tone seen-through property was evaluated, and for each of the pre-coated steel sheets obtained, ethanol rubbing resistance, scratch resistance, and forming adhesion were evaluated. The evaluation method and evaluation criteria for each evaluation are as follows. The results obtained are illustrated in Table 8 below.

### <Color-tone seen-through property>

A colorimeter (CR-400 manufactured by KONICA MINOLTA, INC.) was used to evaluate the color-tone seen-through property based on the following criteria. For each of the pre-coated steel sheets prepared, those with colored layers different in thickness (more specifically, those on which the prepared paint component was painted to have a sufficiently thick film thickness) were separately prepared, and color tones (L*, a*, b*) were measured and used as a reference. Further, the color tones (L*, a*, b*) were also measured for each of the pre-coated steel sheets illustrated in Table 7-1 and Table 7-2 above similarly, and color differences ΔE were calculated. The obtained color differences ΔE were evaluated based on the following evaluation criteria, with a score of 2 or higher being considered a pass.

### [Evaluation criteria]

Score 3:
ΔE is 3 or less
2: ΔE is greater than 3 and 5 or less
1: ΔE is greater than 5

### <Ethanol rubbing resistance>

The ethanol rubbing resistance of each of the obtained pre-coated steel sheets was evaluated based on the following criteria. The surface of the pre-coated steel sheet was rubbed 20 times back and forth with a gauze soaked in ethanol under a load of 1 kgf (1 kgf is about 9.8 N). The appearance of the paint film after rubbing was visually evaluated, and the exposed area ratio of the plating was calculated and evaluated based on the following evaluation criteria. A score of 3 or higher was considered a pass.

### [Evaluation criteria]

Score 5: No change in appearance
4: Flaw marks are observed, but no exposure of the plating of the base is observed
3: Flaw marks are observed, the paint film has peeled off partially, and 1% or more and less than 10% of the plating is exposed
2: Flaw marks are observed, the paint film has peed off partially, and 10% or more and less than 50% of the plating is exposed
1: Flaw marks are observed, the paint film has peeled off partially, and 50% or more of the plating is exposed

### <Scratch resistance>

The scratch resistance of each of the obtained pre-coated steel sheets was evaluated by a coin scratch test based on the following criteria. A coin was brought into contact with the obtained pre-coated steel sheet in a tilted state at an angle of 45 degrees and scratched with a load of 500 g. The evaluation was performed visually based on the following criteria. A score of 3 was considered a pass.

### [Evaluation criteria]

Score 3: No paint film peeling is observed.
2: Paint film peeling is partially observed.
1: The paint film has peeled off completely.

### <Forming adhesion>

The forming adhesion of each of the obtained pre-coated steel sheets was evaluated based on the following criteria. Each of the obtained pre-coated steel sheets was bent 90° with an inner radius of 1 mm in an atmosphere at 20°C, and then a tape peeling test was performed on the outer side of a bent portion. The appearance of a tape peeled portion was evaluated based on the following criteria. A score of 3 was considered a pass.

### [Evaluation criteria]

Score 3: No paint film peeling is observed.
2: Paint film peeling is partially observed.
1: Paint film peeling is observed entirely.

### <Post-scratch corrosion resistance>

Each of the obtained pre-coated steel sheets was subjected to scratching by a coin scratch test based on the following criteria. A coin was brought into contact with the obtained pre-coated steel sheet in a tilted state at an angle of 45 degrees and scratched with a load of 1000 g. Thereafter, a salt spray test (SST) in accordance with JIS Z 2371: 2015 was performed for 72 hours. After the test, test materials were washed and dried, each of which the maximum white rust width from a scratched portion was measured. The maximum white rust width on one side of pieces of the white rust that occurred on both sides of the scratched portion was measured. A 10 × loupe was used for observation. Corrosion resistance was evaluated based on the following evaluation criteria. The pass level was set to 2 or higher.

### [Evaluation criteria]

Score 4: The maximum white rust width that has occurred from the scratched portion is 0.5 mm or less on one side.
3: The maximum white rust width that has occurred from the scratched portion is greater than 0.5 mm and 1.0 mm or less on one side.
2: The maximum white rust width that has occurred from the scratched portion is greater than 1.0 mm and 2.0 mm or less on one side.
1: The maximum white rust width that has occurred from the scratched portion is greater than 2.0 mm.

[Table 8]

**TABLE 8**

| No. | EVALUATION | | | | | NOTE |
|---|---|---|---|---|---|---|
| | COLOR-TONE SEEN-THROUGH PROPERTY | ETHANOL RUBBING RESISTANCE | SCRATCH RESISTANCE | FORMNG ADHESION | POST-SCRATCH CORROSION RESISTANCE | |
| 1 | 1 | 1 | 1 | 3 | 1 | COMPARATIVE EXAMPLE |
| 2 | 2 | 3 | 3 | 3 | 2 | EXAMPLE |
| 3 | 2 | 4 | 3 | 3 | 2 | EXAMPLE |
| 4 | 2 | 5 | 3 | 3 | 2 | EXAMPLE |
| 5 | 3 | 5 | 3 | 3 | 3 | EXAMPLE |
| 6 | 3 | 4 | 3 | 3 | 2 | EXAMPLE |
| 7 | 3 | 3 | 3 | 3 | 2 | EXAMPLE |
| 8 | 3 | 5 | 2 | 2 | 1 | COMPARATIVE EXAMPLE |
| 9 | 3 | 3 | 2 | 1 | 1 | COMPARATIVE EXAMPLE |
| 10 | 3 | 3 | 3 | 3 | 2 | EXAMPLE |
| 11 | 3 | 4 | 3 | 3 | 2 | EXAMPLE |
| 12 | 3 | 5 | 3 | 3 | 3 | EXAMPLE |
| 13 | 3 | 5 | 3 | 3 | 3 | EXAMPLE |
| 14 | 3 | 4 | 3 | 3 | 2 | EXAMPLE |
| 15 | 3 | 3 | 3 | 3 | 2 | EXAMPLE |
| 16 | 3 | 3 | 2 | 2 | 1 | COMPARATIVE EXAMPLE |
| 17 | 3 | 3 | 3 | 3 | 2 | EXAMPLE |
| 18 | 3 | 3 | 2 | 1 | 1 | COMPARATIVE EXAMPLE |
| 19 | 3 | 3 | 1 | 2 | 1 | COMPARATIVE EXAMPLE |
| 20 | 3 | 3 | 3 | 3 | 2 | EXAMPLE |
| 21 | 3 | 4 | 3 | 3 | 2 | EXAMPLE |
| 22 | 3 | 5 | 3 | 3 | 3 | EXAMPLE |
| 23 | 3 | 5 | 3 | 3 | 3 | EXAMPLE |
| 24 | 3 | 4 | 3 | 3 | 2 | EXAMPLE |
| 25 | 2 | 3 | 3 | 3 | 2 | EXAMPLE |
| 26 | 2 | 2 | 1 | 1 | 1 | COMPARATIVE EXAMPLE |
| 27 | 3 | 3 | 3 | 3 | 2 | EXAMPLE |
| 28 | 3 | 5 | 3 | 3 | 3 | EXAMPLE |
| 29 | 3 | 4 | 3 | 3 | 2 | EXAMPLE |
| 30 | 3 | 5 | 3 | 3 | 3 | EXAMPLE |
| 31 | 3 | 5 | 3 | 3 | 3 | EXAMPLE |
| 32 | 3 | 3 | 3 | 3 | 2 | EXAMPLE |
| 33 | 3 | 5 | 3 | 3 | 3 | EXAMPLE |
| 34 | 3 | 3 | 3 | 3 | 2 | EXAMPLE |
| 35 | 3 | 3 | 3 | 3 | 2 | EXAMPLE |
| 36 | 3 | 3 | 3 | 3 | 2 | EXAMPLE |
| 37 | 3 | 4 | 3 | 3 | 2 | EXAMPLE |
| 38 | 3 | 5 | 3 | 3 | 3 | EXAMPLE |
| 39 | 3 | 5 | 3 | 3 | 3 | EXAMPLE |
| 40 | 3 | 4 | 3 | 3 | 2 | EXAMPLE |
| 41 | 3 | 3 | 3 | 3 | 2 | EXAMPLE |
| 42 | 3 | 3 | 1 | 1 | 1 | COMPARATIVE EXAMPLE |
| 43 | 3 | 3 | 2 | 2 | 1 | COMPARATIVE EXAMPLE |
| 44 | 3 | 5 | 3 | 3 | 2 | EXAMPLE |
| 45 | 3 | 5 | 3 | 3 | 2 | EXAMPLE |
| 46 | 3 | 5 | 3 | 3 | 2 | EXAMPLE |
| 47 | 3 | 5 | 3 | 3 | 2 | EXAMPLE |
| 48 | 3 | 5 | 3 | 3 | 2 | EXAMPLE |
| 49 | 3 | 5 | 3 | 3 | 2 | EXAMPLE |
| 50 | 3 | 5 | 3 | 3 | 3 | EXAMPLE |
| 51 | 3 | 5 | 3 | 3 | 4 | EXAMPLE |
| 52 | 3 | 5 | 3 | 3 | 4 | EXAMPLE |
| 53 | 3 | 5 | 3 | 3 | 3 | EXAMPLE |
| 54 | 3 | 5 | 3 | 3 | 2 | EXAMPLE |

As is clear from Table 8 above, it became clear that the pre-coated steel sheets corresponding to the examples of the present invention have both excellent scratch resistance and paint film adhesion, while the pre-coated steel sheets corresponding to the comparative examples of the present invention have either insufficient scratch resistance or paint film adhesion.

The preferred embodiment of the present invention has been described in detail above with reference to the attached drawings, but the present invention is not limited to such an example. It is apparent that a person having common knowledge in the technical field to which the present invention belongs is able to devise various variation or modification examples within the range of technical ideas described in the claims, and it should be understood that such examples belong to the technical scope of the present invention as a matter of course.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impair the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not restrictive. That is, the technique relating to the present invention can offer other clear effects to those skilled in the art from the description herein in addition to or in place of the above-described effects.

Note that the following configuration also belongs to the technical scope of the present invention.
(1) A pre-coated steel sheet, includes:
   a Zn-containing plating layer located on a surface of a base material steel sheet;
   a chemical treatment coating layer located on the Zn-containing plating layer and containing at least zirconium; and
   a coating layer located on the chemical treatment coating layer, in which
   the coating layer contains at least a binder resin and resin particles,
   an average thickness of the coating layer is 3 µm or more and 10 µm or less,
   an intensity of zirconium at the interface of the coating layer on the Zn-containing plating layer side, which is calculated based on a depth profile of the distribution of zirconium of the coating layer by glow discharge optical emission spectrometry, is equal to or more than 1.05 times and equal to or less than 3.00 times an average intensity of zirconium in a range of 1 µm or more and 2 µm or less from the surface of the coating layer toward a thickness direction of the coating layer, which is calculated based on the depth profile, and
   when a cross section of the coating layer cut in the thickness direction is observed, within a region having a length of 60 µm in a direction orthogonal to the thickness direction, an average area ratio of the resin particles in the region is 5% or more and 30% or less.
(2) The pre-coated steel sheet according to (1), in which the coating layer further contains at least one of a crosslinking agent and a color pigment.
(3) The pre-coated steel sheet according to (2), in which the crosslinking agent is at least one of a melamine resin and an isocyanate resin.
(4) The pre-coated steel sheet according to any one of (1) to (3), in which the resin particles are made of the same type of resin as the binder resin.
(5) The pre-coated steel sheet according to any one of (1) to (4), in which an average particle diameter of the resin particles is within a range of 1.5 to 15.0 µm.
(6) The pre-coated steel sheet according to any one of (1) to (5), in which an average particle diameter of the resin particles is within a range of 3.0 to 10.0 µm,
   the content of the resin particles in the coating layer is 5 to 15 mass% relative to the total content of the binder resin and the resin particles, and
   an average thickness of the coating layer is within a range of 4 to 8 µm.
(7) The pre-coated steel sheet according to any one of (1) to (6), in which the resin particles are acrylic resin particles.

### [Explanation of Codes]

1 pre-coated steel sheet
10 zinc-based plated steel sheet
11 base material steel sheet
13 Zn-containing plating layer
20 chemical treatment coating layer
30 coating layer
301 binder resin
303 resin particle

## Claims

1. A pre-coated steel sheet, comprising:
a Zn-containing plating layer located on a surface of a base material steel sheet;
a chemical treatment coating layer located on the Zn-containing plating layer and containing at least zirconium; and
a coating layer located on the chemical treatment coating layer, wherein
the coating layer contains at least a binder resin and resin particles,
an average thickness of the coating layer is 3 µm or more and 10 µm or less,
an intensity of zirconium at the interface of the coating layer on the Zn-containing plating layer side, which is calculated based on a depth profile of the distribution of zirconium of the coating layer by glow discharge optical emission spectrometry, is equal to or more than 1.05 times and equal to or less than 3.00 times an average intensity of zirconium in a range of 1 µm or more and 2 µm or less from the surface of the coating layer toward a thickness direction of the coating layer, which is calculated based on the depth profile, and
when a cross section of the coating layer cut in the thickness direction is observed, within a region having a length of 60 µm in a direction orthogonal to the thickness direction, an average area ratio of the resin particles in the region is 5% or more and 30% or less.

2. The pre-coated steel sheet according to claim 1, wherein
the coating layer further contains at least one of a crosslinking agent and a color pigment.

3. The pre-coated steel sheet according to claim 2, wherein
the crosslinking agent is at least one of a melamine resin and an isocyanate resin.

4. The pre-coated steel sheet according to claim 1 or 2, wherein
the resin particles are made of the same type of resin as the binder resin.

5. The pre-coated steel sheet according to claim 1 or 2, wherein
an average particle diameter of the resin particles is within a range of 1.5 to 15.0 µm.

6. The pre-coated steel sheet according to claim 1 or 2, wherein
an average particle diameter of the resin particles is within a range of 3.0 to 10.0 µm,
the content of the resin particles in the coating layer is 5 to 15 mass% relative to the total content of the binder resin and the resin particles, and
an average thickness of the coating layer is within a range of 4 to 8 µm.

7. The pre-coated steel sheet according to claim 1 or 2, wherein
the resin particles are acrylic resin particles.
